# EUROPEAN PATENT SPECIFICATION

(11) **EP 2 276 804 B1**
(45) Date of publication and mention of the grant of the patent: **19.09.2012**
(21) Application number: 09746114.9
(22) Date of filing: 14.05.2009
(51) Int. Cl.: C08L 83/04, C08K 9/08, C08K 9/06, C08K 3/32

(54) **SILICONE RUBBER COMPOSITIONS**
SILIKONKAUTSCHUKZUSAMMENSETZUNGEN
COMPOSITIONS DE CAOUTCHOUC DE SILICONE

(30) Priority: 14.05.2008 GB 0808675
(43) Date of publication of application: 26.01.2011
(73) Proprietor: Dow Corning Corporation, Midland, Michigan 48686-0994 (US)
(72) Inventor: DAVIES, Lydia, Neath Port Talbot SA11 5AB (GB); PROCTOR, Michael, South Glamorgan CF61 2XR (GB); TAYLOR, Rosemary, Barry CF62 7JE (GB)
(74) Representative: Donlan, Andrew Michael
(86) International application number: PCT/GB2009/050518
(87) International publication number: WO 2009/138797

(56) References cited:
- EP-A- 0 489 518
- US-A1- 2007 093 589
- DATABASE WPI Week 200472 Thomson Scientific, London, GB; AN 2004-732128 XP002536271 -& JP 2004 285291 A (MARUO CALCIUM KK) 14 October 2004 (2004-10-14)
- DATABASE WPI Week 200172 Thomson Scientific, London, GB; AN 2001-619985 XP002536272 -& JP 2001 172511 A (MONBUKAGAKUSHO MUKIZAISHITSU KENKYUJOCHO) 26 June 2001 (2001-06-26)
- DATABASE WPI Week 198846 Thomson Scientific, London, GB; AN 1988-327455 XP002536273 -& JP 63 242264 A (NIPPON STEEL CHEM CO) 7 October 1988 (1988-10-07)

## Description

This invention is related to filled silicone rubber compositions containing treated hydroxyapatite and methods of producing highly filled silicone rubber compositions containing treated hydroxyapatite. In particular, it relates to the use of hydroxyapatite as substantially the only filler in the silicone rubber composition.

Silicone rubbers, often referred to as silicone elastomers, are composed of three essential ingredients. These ingredients are (i) a substantially linear high molecular weight silicone polymer, (ii) one or more filler(s), and (iii) a curing agent, sometimes referred to as a crosslinking agent or a vulcanising agent. Generally, there exist two main types of silicone rubber compositions heat vulcanised, (HTV) silicone rubber and room temperature vulcanising (RTV) silicone rubber. Heat vulcanised or high temperature vulcanising (HTV) silicone rubber compositions are often further differentiated as high consistency rubber (HCR) or liquid silicone rubber (LSR) depending on uncured viscosity of the composition. The name room temperature vulcanising (RTV) silicone rubber compositions, however may be misleading as many RTV compositions require a modicum of heat to progress the reaction at a reasonable rate.

HTV silicone rubber compositions are typically prepared by mixing the substantially linear high molecular weight silicone polymer with the filler and other desired additives to form a base or raw stock. Prior to use, the base is compounded to incorporate the curing agent, other fillers, and additives such as pigments, anti-adhesive agents, plasticizers, and adhesion promoters; and it can be vulcanised by press vulcanisation, injection or transfer moulding or continuously by extrusion, to form the final silicone rubber product. For example silicone rubber compositions used for cable insulation applications are extruded by special techniques in which the silicone rubber is applied to cable cores by means of angular extruder heads.

For high consistency rubber (HCR) the substantially linear high molecular weight silicone polymer most widely employed is a very high viscosity polysiloxane. Such linear high molecular weight silicone polymers have a viscosity of 1,000,000 mPa.s or more at 25°C. Typically these linear high molecular weight silicone polymers have such high viscosities at 25°C that they are in the form of gum like materials which have such high viscosities that the measurement of viscosity is extremely difficult and therefore they are often referred by reference to their Williams plasticity number (ASTM D926). The Williams plasticity number of high viscosity polysiloxane gum-like polymers are generally at least 30, typically they are in the range of from about 30 to 250. The plasticity number, as used herein, is defined as the thickness in millimeters x 100 of a cylindrical test specimen 2 cubic cm in volume and approximately 10 mm in height after the specimen has been subjected to a compressive load of 49 Newtons for three minutes at 25°C. These polysiloxane gum-like polymers generally contain a substantially siloxane backbone (-Si-O-) to which are linked alkyl groups such as for example methyl, ethyl, propyl, isopropyl and t-butyl groups, and unsaturated groups for example alkenyl groups such as allyl, 1-propenyl, isopropenyl, or hexenyl groups but vinyl groups are particularly preferred and/or combinations of vinyl groups and hydroxyl groups to assist in their crosslinking. Such polysiloxane gum-like polymers typically have a degree of polymerisation (DP) of 500-20,000, which represents the number of repeating units in the polymer.

Historically HTV silicone rubber compositions contain one or more fillers. The fillers used are usually referred to as reinforcing fillers and non-reinforcing fillers. Reinforcing fillers impart high strength to vulcanised rubber and may comprise finely divided amorphous silica such as fumed silica and precipitated silica. Extending or non-reinforcing fillers are generally used to reduce the cost of the silicone rubber composition, and generally comprise inexpensive filler materials such as ground quartz, calcium carbonate, and diatomaceous earth. Reinforcing fillers are typically used alone or together with extending or non-reinforcing fillers. The reinforcing fillers are usually treated with organosilanes, organosiloxanes, or organosilazanes, in order to improve the physical and/or mechanical properties of the silicone rubber composition, i.e., tensile strength and compression set.

JP 62-122670 describes the use of hydroxyapatite in an article for medical use comprising the hydroxyapatite which is compatible with living tissue together with an organosiloxane polymer. JP 63-242249 describes an elastic material for use in bone or dental implants. The material comprises a strong ceramic base material which may contain an apatite ceramic and which has a fibre flock, mainly comprising calcium phosphate, adhered to the surface of the base material using a silicone based adhesive. JP 01-186806 describes a dental sealing agent comprising a liquid silicone rubber, optionally blended with iodoform, hydroxyapatite, calcium hydroxide and an X-ray contrast material. JP 2004-285291 describes a modifier for use in silicone rubber compositions. The modifier is provided in the composition to reduce problems caused by "plasticisation return" due to the interaction of silica and silicone polymer in the composition. A wide selection of possible modifiers are provided of which hydroxyapatite is particularly preferred. US2007/0093589 describes a kaolin containing silicone rubber composition which is essentially free of silica fillers.

In accordance with a first embodiment of the present invention there is provided a silicone rubber composition comprising:
(i) an organopolysiloxane having a viscosity of at least 100 mPa.s at 25°C
(ii) treated filler,
(iii) a curing agent suitable for effecting cure of the composition;
characterised in that the treated filler comprises a treated hydroxyapatite filler, to render the filler(s) hydrophobic, treated with a suitable treating agent selected from fatty acids and/or fatty acid esters or organosilanes, organosilazanes or short chain organopolysiloxane polymers and the composition is essentially free of reinforcing silica fillers, such that silica fillers can only be present up to a maximum amount of 5 parts by weight per 100 parts by weight of the cumulative total weight of the polymer + treated hydroxyapatite filler.

Unless otherwise indicated all viscosity measurements are at 25°C. The composition in accordance with the invention can be utilised as a liquid silicone rubber (LSR) composition. When the composition in accordance with the present invention is an LSR the viscosity of the organopolysiloxane polymer used is from 100 to 150 000 mPa.s at 25°C. The composition in accordance with the invention can be utilised as a high consistency rubber (HCR) composition. When the composition in accordance with the present invention is an HCR, the viscosity of the organopolysiloxane polymer used is preferably at least 250 000 mPa.s at 25°C but is typically greater than 1 000 000 mPa.s at 25°C, and has a Williams Plasticity number of at least 30. There is nothing preventing the man skilled in the art using an organopolysiloxane polymer with a viscosity of between 150 000 mPa.s and 250 000 mPa.s at 25°C but the above ranges are preferred for LSR and HCR type compositions respectively.

As hereinbefore described the composition in accordance with the present invention composition is substantially free of reinforcing silica fillers. For the sake of this invention a reinforcing silica filler is intended to mean precipitated silica and fumed silica and any other reinforcing silica (and therefore excludes ground silica which is does not provide silicone rubber compositions with a reinforcing effect). It is to be understood that the term "substantially free" is intended to mean that the composition is essentially free of reinforcing silica fillers, such that silica fillers can only be present up to a maximum amount of 5 parts by weight per 100 parts by weight of the cumulative total weight of the polymer + treated hydroxyapatite filler. Alternatively, reinforcing silica fillers are present up to a maximum amount of 3 parts by weight per 100 parts by weight of the cumulative total weight of the polymer + treated hydroxyapatite filler. Alternatively, reinforcing silica fillers are present up to a maximum amount of 1 part by weight per 100 parts by weight of the cumulative total weight of the polymer + treated hydroxyapatite filler. In a further alternative the composition consists of hydroxyapatite as the only reinforcing filler and contains zero reinforcing silica fillers. Alternatively hydroxyapatite is the only filler present in the composition. It is to be noted that a reinforcing effect is not generally noticed in the physical properties of a silicone rubber unless present in an amount of at least 25 parts by weight of reinforcing filler per 100 parts by weight of polymer. Hence at the levels permitted the reinforcing silica fillers present will have minimal or no reinforcing effect on the physical properties of the silicone rubber. As will be discussed in more detail below when present precipitated silica and/or fumed silica are used for their properties of rheology modifiers. Essentially the reinforcing effect which can be seen in compositions as described herein is provided by the reinforcing properties of hydroxyapatite.

The organopolysiloxane polymer comprises one or more polymers which preferably have the formula:

RR¹₂SiO[(R₂Si-R⁵-(R₂)SiO)ₛ(R₂SiO)ₓ(RZSiO)_{y}] SiRR¹₂

wherein each R is the same or different and is an alkyl group containing 1-6 carbon atoms, a phenyl group or a 3,3,3-trifluoroalkyl group; each Z is the same or different and is hydrogen or an unsaturated hydrocarbon group such as an alkenyl group or an alkynyl group; each R¹ may be the same or different and needs to be compatible with the curing agent used such that the curing agent will cause the polymer to cure. R¹ may be selected from Z, R; a hydroxyl group and/or an alkoxy group. Each R⁵ may be the same or different and is a difunctional saturated hydrocarbon group having from 1 to 6 carbon atoms, x is an integer and y is zero or an integer; s is zero or an integer between 1 and 50; and the sum of x + y +s is a number which results in a suitable polymer viscosity for the end product required. In the case of HCR compositions preferably the viscosity of the polymer is at least 500,000 mPa.s at 25°C. Alternatively In the case of HCR compositions the viscosity of the polymer is at least 1 000,000 mPa.s at 25°C. When y and/or s are integers the (R₂SiO) groups, (RZSiO) groups and/or (R₂Si-R⁵-(R₂)SiO) groups in the polymer chain are either randomly distributed or the organopolysiloxane polymer may be in the form of a block copolymer.

Preferably each R group is an alkyl group; most preferably each R is a methyl or ethyl group. Preferably when Z is an alkenyl group it has between 2 and 10 carbon atoms, more preferably between 2 and 7 carbon atoms, preferred examples being vinyl or hexenyl groups. R⁵ may be, for example, -CH₂-, -CH₂CH₂- and -CH₂CH₂CH₂- but most preferably each R⁵ is -CH₂CH₂-.

In one preferred embodiment of the present invention in which the composition is an HCR composition the organopolysiloxane constituent of the composition may be a mixture of two or more organopolysiloxanes such as a two component mixture having the following formulae:

RR¹₂SiO[(R₂Si-R⁵-(R₂)SiO)ₛ (R₂SiO)ₓ(RZSiO)_{y}]Si RR¹₂ (1)

and

RR¹₂SiO[(R₂Si-R⁵-(A₂)SiO)s¹(R₂SiO)ₓ1 (RZSiO)_{y}¹]SiRR¹₂ (2)

wherein each R is the same or different and is as described above and each R¹ is the same or different and is as described above; x, y and s are as previously defined and the value of x¹y¹ and s' are in the same ranges as x, y and s respectively but at least one of x, y and s has a different value from the value of x' y' and s' respectively. Preferably at least 25% of R¹ groups are Z groups, most preferably alkenyl groups and a viscosity of the polymer mixture of at least 500,000 mPa.s at 25°C, alternatively at least 1 000,000 mPa.s at 25°C with polymer (1) having a degree of polymerisation (DP) i.e. the value of x or the sum of x and (y and/or s when present) of at least 1,000 and polymer (2) having a DP i.e. the value of x¹ or the sum of x¹ and y¹ and/or s¹ (when present) of at least 100.

Hence, the composition may comprise a mixture of two high viscosity organopolysiloxane polymers with the formulae:

Me₂ViSiO[(Me₂SiO)ₓ(MeViSiO)_{y}]Si Me₂Vi

and

Me₂ViSiO[(Me₂SiO)ₓ1]Si Me₂Vi

wherein Me represents the methyl group (-CH₃), Vi represents the vinyl group (CH₂=CH-), the value of the sum of x and y is at least 1,000 and the value of x¹ is at least 1000.

Alternatively in another preferred embodiment the organopolysiloxane comprises a mixture of a two components having the following formulae:

RR¹₂SiO[(R₂SiO)ₓ(RZSiO)_{y}(R₂Si-R⁵-(R₂)SiO)ₛ] SiRR¹₂

and

RR¹₂SiO[(R₂SiO)ₓ¹(RZSiO)_{y}¹]SiRR¹₂

wherein, in each formula, R, Z and R¹ are as described above and x, y, s, x¹ and y¹ are as previously described and the viscosity of the mixture has a value of at least 500,000 mPa.s at 25°C, alternatively at least 1 000,000 mPa.s at 25°C, with the value of x or the sum of x and y and/or s (when either or both are present) being at least 1,000 and the value of x¹ and y¹ being between 100 and 1000. Preferably at least 25% of R¹s are Z groups, most preferably alkenyl groups and the value of x or the sum of x (and y and/or s when present) provides a viscosity of the polymer mixture of at least 500,000 mPa.s at 25°C, alternatively at least 1 000,000 mPa.s at 25°C. Typically the value of x or the sum of x and y and/or s (when present) is at least 1,000.

The inventors have surprisingly identified that hydroxyapatite may be used as the sole reinforcing filler in a silicone rubber composition. Hydroxyapatite, otherwise known as durapatite, hydroxylapatite, alveograf, ossopan and periograf (but which henceforth shall be referred to as hydroxyapatite) is a hydrated divalent metal phosphate having the general empirical formula:

M₅(OH)(PO₄)₃

which can alternatively be written as:

3M₃(PO₄)₂Ca(OH)₂

or

M₁₀(PO₄)₆(OH)₂

M may be any suitable divalent metal ion, such as for example calcium, magnesium, strontium, copper, iron, barium, manganese, nickel and cobalt. The most common examples are where M is calcium.

It occurs as a mineral in phosphate based rocks and the calcium variety is widely found in natural biomaterials such as enamel and bone. Typically they take the shape of hexagonal needles arranged in rosettes which are substantially insoluble in water. It is a well known constituent of prosthetic aids and calcium supplements.

As noted, it is an essential feature of the present invention to use a treated hydroxyapatite filler, to render the filler(s) hydrophobic and therefore easier to handle and obtain a homogeneous mixture with the other components in the composition in accordance with the present invention. Hydrophobing the hydroxyapatite results in the resulting hydrophobically modified hydroxyapatite being easily wetted by the silicone polymer. Hydrophobically modified hydroxyapatite does not clump, and therefore is easily homogeneously incorporated into the silicone polymer.

Treated hydroxyapatite filler comprises the majority of filler present in the composition and is present in an amount of from about 5 to 200 parts by weight per 100 parts by weight of polymer, more preferably 30 -150 parts by weight per 100 parts by weight of the polymer and most preferably from 50 to 125 parts by weight per 100 parts by weight of the polymer.

Any suitable treating agent which renders the surface of the hydroxyapatite hydrophobic may be used. Examples include organic treating agents such as fatty acids and/or fatty acid esters e.g. a stearate, or organosilanes, organosilazanes such as hexaalkyl disilazane or short chain organopolysiloxane polymers e.g. short chain siloxane diols.

Silanes found to be most suitable for the treatment of hydroxyapatite are alkoxysilanes of the general formula R³₍₄₋ₙ₎Si(OR³)ₙ, wherein n has a value of 1-3; and each R³ is the same or different and represents a monovalent organic radical such as an alkyl group, an aryl group, or a functional group such as an alkenyl group, e.g. vinyl or allyl, an amino group or an amido group. Some suitable silanes therefore include alkyltrialkoxysilanes such as methyltriethoxysilane, methyltrimethoxysilane, phenyl tialkoxysilanes such as phenyltrimethoxysilane, or alkenyltrialkoxysilanes such as vinyltriethoxysilane, and vinyltrimethoxysilane. If desired, silazanes can also be used as treating agents for the hydroxyapatite filler. These include (but are not restricted to) hexamethyldisilazane; 1,1,3,3-tetramethyldisilazane; and 1,3-divinyltetramethyldisilazane. Other suitable treating agents which may be utilised in the present invention include those described in the applicant's co-pending patent application WO2008034806.

Short chain organopolysiloxanes might for example include hydroxy terminated polydimethylsiloxanes having a degree of polymerisation of from 2 to 20, hydroxy terminated polydialkyl alkylalkenylsiloxanes having a degree of polymerisation of from 2 to 20 and organopolysiloxanes comprising at least one Si-H group, which may or may not be a terminal group, e.g. those having the formula:

R⁴ₕH₃₋ₕSiO[(R⁴₂SiO)_{f}(R⁴HSiO)_{g}]SiR⁴ₕH₃₋ₕ

wherein in each formula, R⁴ represents an alkyl group containing 1-6 carbon atoms; H is hydrogen, h is zero or an integer from 1 to 3, f and g are independently zero or an integer with the proviso that the treating agent has at least one Si-H group and a viscosity of from 5 to 5000 m.Pa.s at 25°C.

Preferably when treated approximately 1 to 10% by weight of the treated hydroxyapatite filler will be treating agent. Alternatively the treating agent will be from 2.5 to 10% weight of the treated hydroxyapatite filler. The filler may be pre-treated before addition into the composition or may be treated in situ during mixing with the polymer.

A curing agent, as noted above, is required and compounds which can be used herein include organic peroxides such as dialkyl peroxides, diphenyl peroxides, benzoyl peroxide, 1,4-dichlorobenzoyl peroxide, paramethyl benzoyl peroxide, 2,4-dichlorobenzoyl peroxide, di-t-butyl peroxide, dicumyl) peroxide, tertiary butyl-perbenzoate, monochlorobenzoyl peroxide, ditertiary-butyl peroxide, 2,5-bis-(tertiarybutyl-peroxy)-2,5-dimethylhexane, 1, 1-bis(t-butylperoxy)-3,3,5-trimethylcyclohexane tertiary-butyl-trimethyl peroxide, tertiary-butyl-tertiary-butyl-tertiary-triphenyl peroxide, and t-butyl perbenzoate. The most suitable peroxide based curing agents are benzoyl peroxide, 2,4-dichlorobenzoyl peroxide, di-t-butyl peroxide, and dicumyl peroxide. Organic peroxides such as the above are particularly utilised when R¹ in the polymer as defined above is an alkyl group but the presence of some unsaturated hydrocarbon groups per molecule is preferred. It may also be used as the curing agent when R¹ is Z as hereinbefore described.

These organic peroxides may be formed into a paste by dispersing in a silicone oil for ease of introduction into the composition. It is recommended that they are be used in an amount of 0.1 to 10 parts by weight, preferably 0.5 to 2.0 parts by weight, per 100 parts by weight of polymer.

In the case when R¹ is a hydroxy group or an alkoxy group the curing agent may comprise a suitable condensation reaction catalyst alone or in combination with a cross-linking material which undergoes a condensation reaction with the hydrolysable polymer end groups. Typically this means of cure is not preferred for the present invention.

The present compositions can also be cured and/or crosslinked by a hydrosilylation reaction catalyst in combination with an organohydrogensiloxane as the curing agent instead of an organic peroxide, providing each polymer molecule contains at least two unsaturated groups suitable for cross-linking with the organohydrogensiloxane. These groups are typically alkenyl groups, most preferably vinyl groups. To effect curing of the present composition, the organohydrogensiloxane must contain more than two silicon bonded hydrogen atoms per molecule. The organohydrogensiloxane can contain, for example, from about 4-200 silicon atoms per molecule, and preferably from about 4 to 50 silicon atoms per molecule and have a viscosity of up to about 10 Pa.s at 25 °C. The silicon-bonded organic groups present in the organohydrogensiloxane can include substituted and unsubstituted alkyl groups of 1-4 carbon atoms that are otherwise free of ethylenic or acetylenic unsaturation. Preferably each organohydrogensiloxane molecule comprises at least 3 silicon-bonded hydrogen atoms in an amount which is sufficient to give a molar ratio of Si-H groups in the organohydrogensiloxane to the total amount of alkenyl groups in polymer of from 1/1 to 10/1.

Preferably the hydrosilylation catalyst is a platinum group metal based catalyst selected from a platinum, rhodium, iridium, palladium or ruthenium catalyst. Platinum group metal containing catalysts useful to catalyse curing of the present compositions can be any of those known to catalyse reactions of silicon bonded hydrogen atoms with silicon bonded alkenyl groups. The preferred platinum group metal for use as a catalyst to effect cure of the present compositions by hydrosilylation is platinum. Some preferred platinum based hydrosilylation catalysts for curing the present composition are platinum metal, platinum compounds and platinum complexes. Representative platinum compounds include chloroplatinic acid, chloroplatinic acid hexahydrate, platinum dichloride, and complexes of such compounds containing low molecular weight vinyl containing organosiloxanes. Other hydrosilylation catalysts suitable for use in the present,invention include for example rhodium catalysts such as [Rh(O₂CCH₃)₂]₂, Rh(O₂CCH₃)₃, Rh₂(C₈H₁₅O₂)₄, Rh(C₅H_{7O2})₃, Rh(C₅H₇O₂)(CO)₂, Rh(CO)[Ph₃P](C₅H₇O₂), RhX₃[(R³)₂S]₃, (R²₃P)₂Rh(CO)X, (R²₃P)₂Rh(CO)H, Rh₂X₂Y₄, HₐRh_{b} olefin_{c} Cl_{d}, Rh (O(CO)R³)₃₋ₙ(OH)ₙ where X is hydrogen, chlorine, bromine or iodine, Y is an alkyl group, such as methyl or ethyl, CO, C₈H₁₄ or 0.5 C₈H₁₂, R³ is an alkyl radical, cycloalkyl radical or aryl radical and R² is an alkyl radical an aryl radical or an oxygen substituted radical, a is 0 or 1, b is 1 or 2, c is a whole number from 1 to 4 inclusive and d is 2,3 or 4, n is 0 or 1. Any suitable iridium catalysts such as Ir(OOCCH₃)₃, Ir(C₅H₇O₂)₃, [Ir(Z¹)(En)₂]₂, or (Ir(Z¹)(Dien)]₂, where Z¹ is chlorine, bromine, iodine, or alkoxy, En is an olefin and Dien is cyclooctadiene may also be used.

The platinum group metal containing catalyst may be added to the present composition in an amount equivalent to as little as 0.001 part by weight of elemental platinum group metal, per one million parts (ppm) of the composition. Preferably, the concentration of platinum group metal in the composition is that capable of providing the equivalent of at least 1 part per million of elemental platinum group metal. A catalyst concentration providing the equivalent of about 3-50 parts per million of elemental platinum group metal is generally the amount preferred.

To obtain a longer working time or "pot life", the activity of hydrosilylation catalysts under ambient conditions can be retarded or suppressed by addition of a suitable inhibitor. Known platinum group metal catalyst inhibitors include the acetylenic compounds disclosed in U.S. Pat. No. 3,445,420. Acetylenic alcohols such as 2-methyl-3-butyn-2-ol and 1-ethynyl-2-cyclohexanol constitute a preferred class of inhibitors that suppress the activity of a platinum-based catalyst at 25°C. Compositions containing these catalysts typically require heating at temperatures of 70 °C or above to cure at a practical rate. Room temperature cure is typically accomplished with such systems by use of a two-part system in which the crosslinker and inhibitor are in one of the two parts and the platinum is in the other part. The amount of platinum is increased to allow for curing at room temperature.

Inhibitor concentrations as low as one mole of inhibitor per mole of platinum group metal will in some instances impart satisfactory storage stability and cure rate. In other instances inhibitor concentrations of up to 500 or more moles of inhibitor per mole of platinum group metal are required. The optimum concentration for a given inhibitor in a given composition can readily be determined by routine experimentation.

As hereinbefore described the composition of the present invention is substantially free of reinforcing silica fillers. However the composition may comprise up to 5 parts per weight per 100 parts by weight of polymer + treated hydroxyapatite of a rheology modifier. Preferably when present the rheology modifier is present in an amount of from 1 to 3 parts by weight per 100 parts by weight of polymer + treated hydroxyapatite. The rheology modifier may comprise polytetrafluoroethylene (PTFE), boric acid, amorphous precipitated or fumed silica. It is to be understood that the amount of silica present within the ranges permitted are such that it is present in such low amounts so as to have a negligible effect on the physical properties of the resulting composition.

Whilst the composition may also be free of all other fillers, the composition may comprise additional fillers (other than silica reinforcing fillers) such as finely divided, calcium carbonate or additional non-reinforcing fillers such as crushed quartz, diatomaceous earths, barium sulphate, iron oxide, titanium dioxide and carbon black, talc, wollastonite. Other fillers which might be used in addition to the hydroxyapatite include aluminite, calcium sulphate (anhydrite), gypsum, calcium sulphate, magnesium carbonate, clays such as kaolin, aluminium trihydroxide, magnesium hydroxide (brucite), graphite, copper carbonate, e.g. malachite, nickel carbonate, e.g. zarachite, barium carbonate, e.g. witherite and/or strontium carbonate e.g. strontianite, halloysite, sepiolite and/or attapulgite.

Aluminium oxide, silicates from the group consisting of olivine group; garnet group; aluminosilicates; ring silicates; chain silicates; and sheet silicates. The olivine group comprises silicate minerals, such as but not limited to, forsterite and Mg₂SiO₄. The garnet group comprises ground silicate minerals, such as but not limited to, pyrope; Mg₃Al₂Si₃O₁₂; grossular; and Ca₂Al₂Si₃O₁₂. Aluninosilicates comprise ground silicate minerals, such as but not limited to, sillimanite; Al₂SiO₅; mullite; 3Al₂O₃.2SiO₂; kyanite; and Al₂SiO₅. The ring silicates group comprises silicate minerals, such as but not limited to, cordierite and Al₃(Mg,Fe)₂[Si₄AlO₁₈]. The chain silicates group comprises ground silicate minerals, such as but not limited to, wollastonite and Ca[SiO₃].

The sheet silicates group comprises silicate minerals, such as but not limited to, mica; K₂Al₁₄[Si₆Al₂O₂₀](OH)₄; pyrophyllite; Al₄[Si₈O₂₀](OH)₄; talc; Mg₆[Si₈O₂₀](OH)₄ ; serpentine for example, asbestos; Kaolinite; Al₄[Si₄O₁₀](OH)₈; and vermiculite.

The above fillers may be used untreated but are preferably treated with one of the hydrophobing treating agents described above before use.

Other ingredients which may be included in the compositions include but are not restricted to: rheological modifiers, Adhesion promoters, pigments, colouring agents, desiccants, heat stabilizers, Flame retardants, UV stabilizers, cure modifiers, electrically and/or heat conductive fillers, blowing agents, anti-adhesive agents, handling agents, peroxide cure co-agents such as metal salts of carboxylic acids and amines, acid acceptors, water scavengers typically only when the composition is condensation cured, (typically the same compounds as those used as cross-linkers or silazanes). It will be appreciated that some of the additives are included in more than one list of additives. Such additives would then have the ability to function in all the different ways referred to.

Any suitable adhesion promoter(s) may be incorporated in a rubber composition in accordance with the present invention. These may include for example alkoxy silanes such as aminoalkylalkoxy silanes, epoxyalkylalkoxy silanes, for example, 3-glycidoxypropyltrimethoxysilane and, mercapto-alkylalkoxy silanes and γ-aminopropyl triethoxysilane, reaction products of ethylenediamine with silylacrylates. Isocyanurates containing silicon groups such as 1 ,3,5-tris(trialkoxysilylalkyl) isocyanurates may additionally be used. Further suitable adhesion promoters are reaction products of epoxyalkylalkoxy silanes such as 3-glycidoxypropyltrimethoxysilane with amino-substituted alkoxysilanes such as 3-aminopropyltrimethoxysilane and optionally alkylalkoxy silanes such as methyltrimethoxysilane, epoxyalkylalkoxy silane, mercaptoalkylalkoxy silane, and derivatives thereof.

Heat stabilizers may include Iron oxides and carbon blacks, Iron carboxylate salts, cerium hydrate, barium zirconate, magnesium oxide, cerium and zirconium octoates, and porphyrins.

Flame retardants may include for example, carbon black, hydrated aluminium hydroxide, and silicates such as wollastonite, platinum and platinum compounds.

Electrically conductive fillers may include carbon black, metal particles such as silver particles any suitable, electrically conductive metal oxide fillers such as titanium oxide powder whose surface has been treated with tin and/or antimony, potassium titanate powder whose surface has been treated with tin and/or antimony, tin oxide whose surface has been treated with antimony, and zinc oxide whose surface has been treated with aluminium.

Thermally conductive fillers may include metal particles such as powders, flakes and colloidal silver, copper, nickel, platinum, gold aluminium and titanium, metal oxides, particularly aluminium oxide (Al₂O₃) and beryllium oxide (BeO);magnesium oxide, zinc oxide, zirconium oxide; Ceramic fillers such as tungsten monocarbide, silicon carbide and aluminium nitride, boron nitride and diamond.

Handling agents are used to modify the uncured properties of the silicone rubber such as green strength or processability sold under a variety of trade names such as SILASTIC^{®} HA-1, HA-2 and HA-3 sold by Dow Corning corporation).

Peroxide cure co-agents are used to modify the properties, such as tensile strength, elongation, hardness, compression set, rebound, adhesion and dynamic flex, of the cured rubber. These may include di- or tri-functional acrylates such as trimethylolpropane triacrylate and ethylene glycol dimethacrylate; triallyl isocyanurate, triallyl cyanurate, polybutadiene oligomers and the like. Silyl-hydride functional siloxanes may also be used as co-agents to modify the peroxide catalysed cure of siloxane rubbers.

The acid acceptors may include Magnesium oxide, calcium carbonate, Zinc oxide and the like.

The ceramifying agents can also be called ash stabilisers and include silicates such as wollastonite.

Silicone rubber compositions having acceptable mechanical properties when compared to conventional silicone rubber compositions can be produced according to the present invention in a process which involves no heat, and which avoids the necessity to use expensive fumed silica as a reinforcing filler.

Compositions in accordance with the present invention may be prepared in accordance with any suitable method. The conventional route of preparing highly filled silicone rubber compositions is to first make a silicone rubber base by heating a mixture of reinforcing filler (typically e.g. fumed silica), a treating agent for the reinforcing filler (fumed silica), and an organopolysiloxane e.g. a polysiloxane gum in a mixer. The silicone rubber base is removed from the first mixer and transferred to a second mixer where generally about 150 parts by weight of a non-reinforcing or extending filler such as ground quartz is added per 100 parts by weight of the silicone rubber base. Other additives are typically fed to the second mixer such as curing agents, pigments and colouring agents, heat stabilizers, anti-adhesive agents, plasticisers, and adhesion promoters. This route may also be utilised for compositions of the present invention with the reinforcing filler being hydroxyapatite.

However, in a preferred embodiment of the present invention there is provided a method of making a treated hydroxyapatite containing silicone rubber composition consisting essentially of the steps of (i) mixing an organopolysiloxane polymer and treated hydroxyapatite under room temperature conditions, the mixture prepared in (i) being free of reinforcing silica fillers; (ii) adding a curing agent to the mixture in (i); and curing the mixture in (ii) at a temperature above room temperature by the application of heat.

It is to be understood that room temperature conditions means atmospheric pressure and a room temperature at normal ambient temperature of 20-25°C. It is a major advantage in the case of the present invention that heat is not required to be added during step (i) as is required when undertaking the in-situ treatment of reinforcing fillers. As in all mixing processes the effect of mixing will generate heat but mixing in the case of the present invention will not require any additional heat input.

Because hydroxyapatite disperses much more easily than fumed silica in polysiloxane gums, the total mixing cycle is considerably reduced, giving much greater mixer utilization. In addition, since hydroxyapatite is semi-reinforcing filler, it is capable of providing a finished composition having adequate mechanical properties. However, because hydroxyapatite is only semi-reinforcing, a higher loading level needs to be used than would be the case for fumed silica. On the other hand, because of the lower cost of hydroxyapatite compared to silica, it is not necessary to use a large amount of hydroxyapatite to obtain the right level of economic attractiveness for the finished composition. Preferably the ratio of treated hydroxyapatite to organopolysiloxane is from 1:2 to 2:1. Thus, one is enabled to use, for example, about 100 parts by weight of hydroxyapatite in 100 parts by weight of the organopolysiloxane e.g. polysiloxane gum, without using fumed silica.

The same level of mechanical properties can thereby be obtained as with finished compositions containing fumed silica. Furthermore, the elimination of fumed silica means that no heating is required, and the whole compounding process can be carried out in a single mixer. In addition, the incorporation time for hydroxyapatite is much higher than for fumed silica, with the result that mixer capacity is increased by utilizing the faster throughput. Finally hydroxyapatite has a much higher bulk density than fumed silica, which allows much improved ease of handling and storage.

These finished hydroxyapatite containing silicone rubber compositions are useful in applications such as silicone profile extrusions, wire and cable coatings, glazing, and for construction gaskets. Specific examples include the use of this product in window glazing gaskets, wire and cable such as plenum or safety cable sheathing applications, double glazing spacer gaskets. The only requirement relative to its use is that the finished composition has a property profile roughly equivalent to that acceptable for the particular application. The composition of the present invention may also be used in the production of silicone rubber sponges with the addition of a suitable foaming agent. Any suitable foaming agent may be used. The resulting product is particularly useful for manufacturing insulating glazing spacer gaskets.

The following examples are set provided in order to illustrate the invention in more detail.

As used herein, the term room temperature is intended to mean the normal ambient temperature of from 20-25 °C. All viscosities were measured at 25°C unless otherwise indicated. The hydroxyapatite used in the examples was a calcium hydroxyapatite.

Hardness was determined according to the international standard for hardness measurements of rubber, plastic and other non-metallic materials, using a durometer described in the American Society for Testing and Material specification ASTM D2240, which is the recognized specification for the instrument and test procedure.

### EXAMPLES

### PREPARATION OF TREATED HYDROXYAPATITE

Hydroxyapatite having a particle size of 5µm and a surface area of 63 m²/g was placed in the mixing bowl of an ordinary domestic food mixer. The chosen treating agent was then introduced into the mixing bowl in a sufficient quantity to obtain the desired level of treatment of the hydroxyapatite surface. The mixer was left to run for 10 min minutes, scraping down any residual material attached to the blade and side wall of the bowl. The sample was mixed for a further 15 minutes and then the contents of the mixing bowl were transferred to a metal tray, and placed in an air circulating oven at 120 °C for a minimum period of 12 hours.

Compositions in accordance with the present invention were then prepared by initially preparing polymer/filler bases via either procedure A or B below:-

### COMPOUNDING - PROCEDURE A

The treated filler, prepared as described above, was mixed with a selected polydimethylsiloxane polymer (PDMS) in a Brabender internal mixer. In every case, the mixing procedure used was the same. According to the procedure, the mixer blades were initiated so as to rotate at maximum speed, the required quantity of PDMS was placed in the mixer, the required quantity of treated filler was added to the mixer, and once the hydroxyapatite addition had been completed, the mixer was allowed to run for an additional 30 minutes. The fill level of the mixer was kept constant by calculating the amount of hydroxyapatite and PDMS in volumetric terms (assuming that the density of PDMS was 1.0 gcm⁻³, and the density of the treated hydroxyapatite was 3.08 gcm⁻³).

### COMPOUNDING - PROCEDURE B

The treated filler, prepared as described above, was mixed with a selected polydimethylsiloxane polymer (PDMS) in a Winkworth internal z-blade mixer. The required quantity of PDMS was placed in the mixer, and the required treated filler was added at regular intervals throughout the duration of the mix until the total amount required had been added. Subsequent to each step of treated filler introduction the mixture was checked to ensure it was homogenous before any further additions of filler were added. After the final addition of filler, the mixer was allowed to run for an additional 30 minutes. The fill level of the mixer was kept constant by calculating the amount of hydroxyapatite and PDMS in volumetric terms in the same manner as in Procedure A above.

### TESTING OF THE COMPOUNDS

The resulting bases were mixed with a suitable curing agent on a two-roll mill. The compounds were then cross-linked, and/or cured, into test sheets by the application of heat and pressure in a suitable mould using the cure programs indicated below.

### EXAMPLE 1 - UNTREATED HYDROXYAPATITE

30 parts of the respective filler was mixed, as described above, with
a) 35 parts by weight of a dimethylvinylsiloxy terminated dimethylsiloxane-methylvinylsiloxane co-polymer (in which the mole ratio of dimethylsiloxane units to methylvinylsiloxane units was = 99.82:0.18) having an average degree of polymerization (dp) of 7,000; and
b) 35 parts by weight of a dimethylvinylsiloxy terminated polydimethylsiloxane with an average dp of 7,000.

The resulting silicone rubber composition was vulcanised with
(i) 1.2 parts per 100g of a mixture of 2,4-dichlorobenzoyl peroxide (50 % by weight) dispersed in gum (b) press molded for 5 minutes at 116 ºC under a pressure of 2 MPa to form a silicone rubber sheet with a thickness of 2 mm, which was then placed for 4 hours in a heat-circulation type oven at 200 ºC.
(ii) 1.0 parts per 100g of a mixture of 2,5-bis-(t-butyl peroxy)-2,5-dimethylhexane (50 % by weight) dispersed in gum (b) press molded for 10 min at 170 ºC under a pressure of 2 MPa to form a silicone rubber sheet with a thickness of 2 mm,
(iii) 1.5 parts per 100g of a mixture of dicumyl peroxide (50 % by weight) dispersed in chalk press molded for 10 min at 170 ºC under a pressure of 2 MPa to form a silicone rubber sheet with a thickness of 2 mm.

Differing degrees of success in the cure of the composition occurred with the different curing agents. The untreated hydroxyapatite prevented the cure of the 2,4-dichlorobenzoyl peroxide (50 % by weight) and whilst some degree of cure was seen using the other curing agents, the resulting physical properties of the elastomeric products were inadequate as can be seen in Table 1 below.

**Table 1 - Physical Properties of compositions comprising untreated hydroxyapatite**

| Property | 2,4-dichlorobenzoyl peroxide | 2,5-bis-(t-butyl peroxy)-2,5-dimethylhexane | Dicumyl peroxide |
|---|---|---|---|
| Durometer (Shore A) | DNC | 44.4 | 45.9 |
| Elongation (%) | DNC | 469 | 404 |
| Tensile Strength (Mpa) | DNC | 1.14 | 1.38 |

| | | | |
|---|---|---|---|
| DNC =Did Not Cure | | | |

### EXAMPLE 2 - TREATED HYDROXYAPATITE

50 parts by weight of treated hydroxyapatite with 5% treatment level a trimethylsilyl terminated methyl hydrogen siloxane having a viscosity of 20 m.Pa.s at 25°C prepared as described above in Procedure A, and mixed, as described in Compounding Procedure B , with
a) 25 parts by weight of a dimethylvinylsiloxy terminated dimethylsiloxane-methylvinylsiloxane copolymer, in which the mole ratio of dimethylsiloxane units to methylvinylsiloxane units was 99.82:0.18, with an average dp of 7,000; and
b) 25 parts by weight of a dimethylvinylsiloxy terminated polydimethylsiloxane with an average dp of 7,000, having both of its terminal ends of the molecular chain endblocked by dimethylvinylsiloxy groups.

The resulting silicone rubber composition was vulcanised with
a) 1.2 parts per 100gm of a mixture of 2,4-dichlorobenzoyl peroxide (50 % by weight) and gum (b) above, press molded for 5 minutes at 116 ºC under a pressure of 2 MPa to form a silicone rubber sheet with a thickness of 2 mm, which was then placed for 4 hours in a heat-circulation type oven at 200 ºC.
b) 1.0 part per 100gm of 2,5-bis-(t-butyl peroxy)-2,5-dimethylhexane ( 45%) and gum (b) above, press molded for 10 min at 170 ºC under a pressure of 2 MPa to form a silicone rubber sheet with a thickness of 2 mm,
c) 1.5 part per 100gm of Dicumyl Peroxide (40%) and dispersed in chalk, press molded for 10 min at 170 ºC under a pressure of 2 MPa to form a silicone rubber sheet with a thickness of 2 mm.

Specimens were cut from the resultant sheet and mechanical properties were measured. Tensile and Elongation where determined by DIN 53 504. Durometer (Shore A) was determined by ASTM D2240. It will be noted that when using treated hydroxyapatite the 2,4-dichlorobenzoyl peroxide curing agent successfully cured the composition in accordance with the invention, unlike when the hydroxyapatite was untreated. The 2,5-bis-(t-butyl peroxy)-2,5-dimethylhexane peroxide gave a suitable cured specimen suitable for physical testing. The Dicumyl peroxide gave a suitable cured specimen suitable for physical testing. The results are shown in table 2.

**Table 2 - Physical properties of elastomers prepared as described in Example 2 using from trimethylsilyl terminated methyl hydrogen siloxane treated hydroxyapatite.**

| Property | 2,4-dichlorobenzoyl peroxide (2,4DCL) | 2,5-bis-(t-butyl peroxy)-2,5-dimethylhexane (DHBP) | Dicumyl peroxide (DCP) |
|---|---|---|---|
| Durometer (Shore A) | 55.8 | 57.2 | 57.7 |
| Elongation (%) | 268.9 | 264 | 254 |
| Tensile Strength (Mpa) | 5.25 | 5.22 | 4.9 |

It is to be noted that the tensile strength result was improved considerably and would provide a suitable level of reinforcement in the respective cured silicone elastomers in the absence of the commonly used reinforcing fillers described above.

This fact is confirmed when the results of heat aging of the cured elastomers at 200°C using untreated and treated hydroxyapatite prepared as described in Examples 1 and 2 above. The results provided for tensile strength and elongation are given in Table 3 in % values varying from the unaged starting values as indicated in Tables 1 and 2 above after the periods in time indicated. Samples were are compared as shown in Table 3 in which U stands for compositions made using untreated hydroxyapatite (as described above in example 1) and T stands for compositions made using treated hydroxyapatite (as described above in Example 2).

**Table 3 - A comparison of Aging Results using untreated and treated hydroxyapatite**

| | | Curing Agent | | | | | |
|---|---|---|---|---|---|---|---|
| | | 2,4DCL | | DHBP | | DCP | |
| Property | Time (hours) | U % Change | T % Change | U % Change | T % Change | U % Change | T % Change |
| Elongation | 72 | DNC | -9 | -55 | -5 | -53 | -8 |
| | 168 | DNC | -12 | -69 | -19 | -58 | -27 |
| | 240 | DNC | -38 | -85 | -37 | -82 | -51 |
| Tensile Strength | 72 | DNC | 0 | +125 | -16 | +101 | -8 |
| | 188 | DNC | -21 | +25 | -31 | +19 | -28 |
| | 240 | DNC | -39 | +28 | -43 | +20 | -40 |

| | | | | | | | |
|---|---|---|---|---|---|---|---|
| DNC = did not cure | | | | | | | |

Whilst the tensile strength results improved with age for the compositions containing untreated hydroxyapatite it should be noted that the original values were so poor as to be unusable and even the improvements upon aging, whilst surprising did not provide an elastomeric product suitable for use.

## Claims

1. A silicone rubber composition comprising:
(i) an organopolysiloxane having a viscosity of at least 100 mPa.s at 25°C
(ii) treated filler,
(iii) a curing agent suitable for effecting cure of the composition;
**characterised in that** the treated filler comprises a treated hydroxyapatite filler, to render the filler(s) hydrophobic, treated with a suitable treating agent selected from fatty acids and/or fatty acid esters or organosilanes, organosilazanes or short chain organopolysiloxane polymers and the composition is essentially free of reinforcing silica fillers, such that silica fillers can only be present up to a maximum amount of 5 parts by weight per 100 parts by weight of the cumulative total weight of the polymer + treated hydroxyapatite filler.

2. A composition according to Claim 1 in which the organopolysiloxane polymer comprises one or more polymers which preferably have the formula:
RR¹₂SiO[(R₂Si-R⁵-(R₂)SiO)ₛ(R₂SiO)ₓ(RZSiO)_{y}] SiRR¹₂
wherein each R is the same or different and is an alkyl group containing 1-6 carbon atoms, a phenyl group or a 3,3,3-trifluoroalkyl group; each Z is the same or different and is hydrogen or an unsaturated hydrocarbon group such as an alkenyl group or an alkynyl group; each R¹ may be the same or different and needs to be compatible with the curing agent used such that the curing agent will cause the polymer to cure. R¹ may be selected from Z, R; a hydroxyl group and/or an alkoxy group; each R⁵ may be the same or different and is a difunctional saturated hydrocarbon group having from 1 to 6 carbon atoms; x is an integer, y is zero or an integer; s is zero or an integer between 1 and 50.

3. A composition according to Claim 1 or 2 in which the organopolysiloxane polymer is a two component mixture comprise a mixture of two high viscosity organopolysiloxane polymers with the formulae:
Me₂ViSiO[(Me₂SiO)ₓ(MeViSiO)_{y}]Si Me₂Vi
and
Me₂ViSiO[(Me₂SiO)ₓ¹]Si Me₂Vi
wherein Me represents the methyl group (-CH₃) , Vi represents the vinyl group (CH₂=CH-), the value of the sum of x and y is at least 1,000 and the value of x¹ is at least 1000.

4. A composition according to Claim 1 or 2 in which the organopolysiloxane polymer is a two component mixture having the following formulae:
RR¹₂SiO[(R₂SiO)ₓ(RZSiO)_{y}(R₂Si-R⁵-(R₂)SiO)ₛ]SiRR¹₂
and
RR¹₂SiO[(R₂SiO)ₓ¹(RZSiO)_{y}1]SiRR¹ ₂
wherein, in each formula, R Z and R¹ are as described above and x, y, s, x¹ and y¹ are as previously described and the viscosity of the mixture has a value of at least 500,000 mPa.s at 25°C with the value of x or the sum of x and y and/or s (when either or both are present) being at least 1,000 and the value of x¹ and y¹ being between 100 and 1000.

5. A composition according to any preceding claim **characterised in that** the hydroxyapatite is treated with an organopolysiloxane selected from the group of hydroxy terminated polydimethylsiloxanes having a degree of polymerisation of from 2 to 20, hydroxy terminated polydialkyl alkylalkenylsiloxanes having a degree of polymerisation of from 2 to 20 and a treating agent having the formula:
R⁴_{d}H_{3-d}SiO[(R⁴₂SiO)_{f}(R⁴HSiO)_{g}]SiR⁴_{d}H_{3-d}
wherein in each formula, R⁴ represents an alkyl group containing 1-6 carbon atoms; H is hydrogen, d is zero or an integer from 1 to 3, represents the vinyl group; and f and g are independently is zero or an integer which treating agent has at least one Si-H groups and a viscosity of from 5 to 500 m.Pa.s at 25°C.

6. A composition according to any preceding claim wherein the hydroxyapatite comprises a hydroxyapatite treated with an alkoxysilane of the formula:
R³₍₄₋ₙ₎Si(OR³) ₙ
wherein n has a value of 1-3; and R³ is an alkyl group, an aryl group, or an alkenyl group.

7. A composition according to Claim 6 in which the alkoxysilane is a compound selected from the group consisting of methyltriethoxysilane, methyltrimethoxysilane, phenyltrimethoxysilane, vinyltriethoxysilane, and vinyltrimethoxysilane.

8. A composition according to any preceding Claim comprising about equal amounts of polysiloxane gum and hydroxyapatite.

9. A composition according to any preceding claim in which the curing agent is a peroxide selected from the group consisting of benzoyl peroxide, 2,4-dichlorobenzoyl peroxide, di-t-butyl peroxide, and dicumyl peroxide.

10. A composition in accordance with any one of claims 1 to 8 in which the curing agent is an organohydrogensiloxane curing agent, and a platinum group metal hydrosilylation catalyst is added in an amount sufficient to cure the composition.

11. A method of making a treated hydroxyapatite containing silicone rubber composition in accordance with any one of claims 1 to 10 which method consists essentially of the steps:
(i) mixing an organopolysiloxane and treated hydroxyapatite under room temperature conditions,
(ii) adding a curing agent to the mixture in (i); and curing the mixture in (ii) at a temperature above room temperature by the application of heat.

12. A method according to Claim 11 in which room temperature is normal ambient temperature of 20-25 °C.

13. Use of a treated hydroxyapatite as a reinforcing filler in silicone rubber composition comprising:
(i) an organopolysiloxane having a viscosity of at least 100 mPa.s at 25°C
(ii) treated filler,
(iii) a curing agent suitable for effecting cure of the composition;
**characterised in that** the treated filler comprises a treated hydroxyapatite filler, to render the filler(s) hydrophobic, treated with a suitable treating agent selected from fatty acids and/or fatty acid esters or organosilanes, organosilazanes or short chain organopolysiloxane polymers and the composition is essentially free of reinforcing silica fillers, such that silica fillers can only be present up to a maximum amount of 5 parts by weight per 100 parts by weight of the cumulative total weight of the polymer + treated hydroxyapatite filler.

14. Use in accordance with claim 13 **characterised in that** the silicone rubber composition is free of silica.

15. Use in accordance with claim 13 wherein the treated hydroxyapatite is the sole reinforcing filler in the silicone rubber composition.

16. Use of a silicone rubber composition in accordance with any one of claims 1 to 7 in silicone profile extrusions, wire and cable coatings, glazing gaskets, and for construction gaskets.

17. A silicone rubber composition in accordance with claim 1 **characterised in that** the reinforcing filler consists of hydroxyapatite.

## Patentansprüche

1. Eine Silikonkautschukzusammensetzung, die Folgendes beinhaltet:
(i) ein Organopolysiloxan, das eine Viskosität von mindestens 100 mPa.s bei 25 °C aufweist
(ii) behandelten Füller,
(iii) ein Aushärtemittel, das geeignet ist, das Aushärten der Zusammensetzung auszuführen;
**dadurch gekennzeichnet, dass** der behandelte Füller einen behandelten Hydroxyapatitfüller, der mit einem geeigneten Behandlungsmittel, ausgewählt aus Fettsäuren und/oder Fettsäureestern oder Organosilanen, Organosilazanen oder Kurzketten-Organopolysiloxanpolymeren, behandelt ist, beinhaltet, um den/die Füller hydrophob zu machen, und dass die Zusammensetzung im Wesentlichen frei von Siliciumdioxid-Verstärkungsfüllern ist, so dass Siliciumdioxidfüller nur bis zu einer Höchstmenge von 5 Gewichtssteilen pro 100 Gewichtsteile des gesamten Totalgewichts des Polymers + des behandelten Hydroxyapatitfüllers vorhanden sein können.

2. Zusammensetzung gemäß Anspruch 1, bei der das Organopolysiloxanpolymer eines oder mehrere Polymere beinhaltet, die vorzugsweise die folgende Formel aufweisen:
RR¹₂SiO[(R₂Si-R⁵-(R₂)SiO)ₛ(R₂SiO)ₓ(RZSiO)_{y}]SiRR¹₂
wobei jedes R gleich oder unterschiedlich ist und eine Alkylgruppe ist, die 1-6 Kohlenstoffatome, eine Phenylgruppe oder eine 3,3,3-Trifluoralkylgruppe enthält; jedes Z gleich oder unterschiedlich ist und Wasserstoff oder eine ungesättigte Kohlenwasserstoffgruppe, wie etwa eine Alkenylgruppe oder eine Alkynylgruppe ist; jedes R¹ gleich oder unterschiedlich sein kann und mit dem verwendeten Aushärtemittel kompatibel sein muss, so dass das Aushärtemittel das Polymer zum Aushärten bringt; R¹ aus Z, R; einer Hydroxylgruppe und/oder einer Alkoxygruppe ausgewählt sein kann; jedes R⁵ gleich oder unterschiedlich sein kann und eine difunktionelle gesättigte Kohlenwasserstoffgruppe ist, die von 1 bis 6 Kohlenstoffatome aufweist; x eine ganze Zahl ist, y Null oder eine ganze Zahl ist; s Null oder eine ganze Zahl zwischen 1 und 50 ist.

3. Zusammensetzung gemäß Anspruch 1 oder 2, bei der das Organopolysiloxanpolymer eine Zweikomponentenmischung ist, die eine Mischung aus zwei Organopolysiloxanpolymeren mit hoher Viskosität beinhaltet, die die folgenden Formeln aufweisen:
Me₂ViSiO[(Me₂SiO)ₓ(MeViSiO)_{y}]Si Me₂Vi
und
Me₂ViSiO[(Me₂SiO)ₓ¹]Si Me₂Vi
wobei Me die Methylgruppe (-CH₃) darstellt, Vi die Vinylgruppe (CH₂=CH-) darstellt, der Wert der Summe von x und y mindestens 1000 beträgt und der Wert von x¹ mindestens 1000 beträgt.

4. Zusammensetzung gemäß Anspruch 1 oder 2, bei der das Organopolysiloxanpolymer eine Zweikomponentenmischung ist, die die folgenden Formeln aufweist:
RR¹₂SiO[(R₂SiO)ₓ(RZSiO)_{y}(R₂Si-R⁵-(R₂)SiO)ₛ] SiRR¹₂
und
RR¹₂SiO[(R₂SiO)ₓ¹(RZSiO)_{y}¹]SiRR¹₂
wobei bei jeder Formel R Z und R¹ wie oben beschrieben sind und x, y, s, x¹ und y¹ wie vorher beschrieben sind und die Viskosität der Mischung einen Wert von mindestens 500000 mPa.s bei 25 °C aufweist, wobei der Wert von x oder die Summe von x und y und/oder s (wenn eines oder beide vorhanden sind) mindestens 1000 beträgt und der Wert von x¹ und y¹ zwischen 100 und 1000 beträgt.

5. Zusammensetzung gemäß einem der vorhergehenden Ansprüche, **dadurch gekennzeichnet, dass** der Hydroxyapatit mit einem Organopolysiloxan, ausgewählt aus der Gruppe von hydroxyterminierten Polydimethylsiloxanen mit einem Polymerisationsgrad von 2 bis 20, hydroxyterminierten Polydialkylalkylalkenylsiloxanen mit einem Polymerisationsgrad von 2 bis 20, und einem Behandlungsmittel, behandelt ist, das die folgende Formel aufweist:
R⁴_{d}H_{3-d}SiO[(R⁴₂SiO)_{f}(R⁴HSiO)_{g}]SiR⁴_{d}H_{3-d}
wobei R⁴ in jeder Formel eine Alkylgruppe, die 1-6 Kohlenstoffatome enthält, darstellt; H Wasserstoff ist; d Null oder eine ganze Zahl von 1 bis 3 ist; und f und g unabhängig Null oder eine ganze Zahl sind, wobei das Behandlungsmittel mindestens eine Si-H-Gruppen und eine Viskosität von von 5 bis 500 m.Pa.s bei 25 °C aufweist.

6. Zusammensetzung gemäß einem der vorhergehenden Ansprüche, wobei der Hydroxyapatit einen Hydroxyapatit beinhaltet, der mit einem Alkoxysilan der folgenden Formel behandelt ist:
R³₍₄₋ₙ₎Si(OR³)ₙ
wobei n einen Wert von 1-3 aufweist; und R³ eine Alkylgruppe, eine Arylgruppe oder eine Alkenylgruppe ist.

7. Zusammensetzung gemäß Anspruch 6, bei der das Alkoxysilan eine Verbindung ist, die aus der Gruppe, bestehend aus Methyltriethoxysilan, Methyltrimethoxysilan, Phenyltrimethoxysilan, Vinyltriethoxysilan und Vinyltrimethoxysilan, ausgewählt ist.

8. Zusammensetzung gemäß einem der vorhergehenden Ansprüche, die etwa gleiche Mengen von Polysiloxangummi und Hydroxyapatit beinhaltet.

9. Zusammensetzung gemäß einem der vorhergehenden Ansprüche, bei der das Aushärtemittel ein Peroxid ist, das aus der Gruppe, bestehend aus Benzoylperoxid, 2,4-Dichlorbenzoylperoxid, Di-t-butylperoxid und Dicumylperoxid, ausgewählt ist.

10. Zusammensetzung gemäß einem der Ansprüche 1 bis 8, bei der das Aushärtemittel ein Organowasserstoffsiloxan-Aushärtemittel ist und ein Platingruppenmetall-Hydrosilylierungskatalysator in einer Menge, die ausreicht, um die Zusammensetzung auszuhärten, hinzugefügt wird.

11. Verfahren zum Herstellen einer Silikonkautschukzusammensetzung, die behandelten Hydroxyapatit enthält, gemäß einem der Ansprüche 1 bis 10, wobei das Verfahren im Wesentlichen aus den folgenden Schritten besteht:
(i) Mischen eines Organopolysiloxans und eines behandelten Hydroxyapatits unter Raumtemperaturbedingungen,
(ii) Hinzufügen eines Aushärtemittels zu der Mischung in (i); und Aushärten der Mischung in (ii) bei einer Temperatur über Raumtemperatur durch die Anwendung von Wärme.

12. Verfahren gemäß Anspruch 11, bei dem Raumtemperatur normale Umgebungstemperatur von 20-25 °C ist.

13. Verwendung eines behandelten Hydroxyapatits als ein Verstärkungsfüller in einer Silikonkautschukzusammensetzung, die Folgendes beinhaltet:
(i) ein Organopolysiloxan, das eine Viskosität von mindestens 100 mPa.s bei 25 °C aufweist
(ii) behandelten Füller,
(iii) ein Aushärtemittel, das geeignet ist, das Aushärten der Zusammensetzung auszuführen;
**dadurch gekennzeichnet, dass** der behandelte Füller einen behandelten Hydroxyapatitfüller, der mit einem geeigneten Behandlungsmittel, ausgewählt aus Fettsäuren und/oder Fettsäureestern oder Organosilanen, Organosilazanen oder Kurzketten-Organopolysiloxanpolymeren, behandelt ist, beinhaltet, um den/die Füller hydrophob zu machen, und dass die Zusammensetzung im Wesentlichen frei von Siliciumdioxid-Verstärkungsfüllern ist, so dass Siliciumdioxidfüller nur bis zu einer Höchstmenge von 5 Gewichtssteilen pro 100 Gewichtsteile des gesamten Totalgewichts des Polymers + des behandelten Hydroxyapatitfüllers vorhanden sein können.

14. Verwendung gemäß Anspruch 13, **dadurch gekennzeichnet, dass** die Silikonkautschukzusammensetzung frei von Siliciumdioxid ist.

15. Verwendung gemäß Anspruch 13, wobei der behandelte Hydroxyapatit der einzige Verstärkungsfüller in der Silikonkautschukzusammensetzung ist.

16. Verwendung einer Silikonkautschukzusammensetzung gemäß einem der Ansprüche 1 bis 7 bei Silikonprofilextrusionen, Draht- und Kabelbeschichtungen, Verglasungsdichtungen und für Baudichtungen.

17. Silikonkautschukzusammensetzung gemäß Anspruch 1, **dadurch gekennzeichnet, dass** der Verstärkungsfüller aus Hydroxyapatit besteht.

## Revendications

1. Une composition de caoutchouc de silicone comprenant :
(i) un organopolysiloxane ayant une viscosité d'au moins 100 mPa.s à 25 °C
(ii) une charge traitée,
(iii) un agent de durcissement convenant pour effectuer le durcissement de la composition ;
**caractérisée en ce que** la charge traitée comprend une charge d'hydroxyapatite traitée, pour rendre le ou les charges hydrophobes, traitée avec un agent de traitement adéquat sélectionné parmi les acides gras et / ou les esters d'acides gras ou les organosilanes, les organosilazanes ou les polymères organopolysiloxanes à chaîne courte et la composition est essentiellement dépourvue de charges de silice de renforcement, de telle sorte que des charges de silice ne peuvent être présentes que jusqu'à une quantité maximale de 5 parties en poids pour 100 parties en poids du poids total cumulatif du polymère + la charge d'hydroxyapatite traitée.

2. Une composition selon la revendication 1 dans laquelle le polymère organopolysiloxane comprend un ou plusieurs polymères qui ont de préférence la formule :
RR¹₂SiO[(R₂Si-R⁵-(R₂)SiO)ₛ(R₂SiO)ₓ(RZSiO)_{y}]SiRR¹₂
où chaque R est le même ou différent et est un groupe alkyle contenant de 1 à 6 atomes de carbone, un groupe phényle ou un groupe 3,3,3-trifluoroalkyle ; chaque Z est le même ou différent et est de l'hydrogène ou un groupe hydrocarbure insaturé tel qu'un groupe alcényle ou un groupe alcynyle ; chaque R¹ peut être le même ou différent et doit être compatible avec l'agent de durcissement utilisé de telle sorte que l'agent de durcissement amènera le polymère à durcir ; R¹ peut être sélectionné parmi Z, R ; un groupe hydroxyle et / ou un groupe alkoxy ; chaque R⁵ peut être le même ou différent et est un groupe hydrocarbure saturé disfonctionnel ayant de 1 à 6 atomes de carbones ; x est un nombre entier, y est zéro ou un nombre entier ; s est zéro ou un nombre entier compris entre 1 et 50.

3. Une composition selon la revendication 1 ou la revendication 2 dans laquelle le polymère organopolysiloxane est un mélange à deux composants comprenant un mélange de deux polymères organopolysiloxanes à viscosité élevée ayant les formules :
Me₂ViSiO[(Me₂SiO)ₓ(MeViSiO)_{y}]Si Me₂Vi
et
Me₂ViSiO[(Me₂SiO)ₓ¹]Si Me₂Vi
où Me représente le groupe méthyle (-CH₃), Vi représente le groupe vinyle (CH₂=CH-), la valeur de la somme de x et y est au moins 1 000 et la valeur de x¹ est au moins 1 000.

4. Une composition selon la revendication 1 ou la revendication 2 dans laquelle le polymère organopolysiloxane est un mélange à deux composants ayant les formules suivantes :
RR¹₂SiO[(R₂SiO)ₓ(RZSiO)_{y}(R₂Si-R⁵-(R₂)SiO)ₛ] SiRR¹₂
et
RR¹₂SiO[(R₂SiO)ₓ¹(RZSiO)_{y}¹]SiRR¹₂
où, dans chaque formule, R Z et R¹ sont tels que décrits ci-dessus et x, y, s, x¹ et y¹ sont tels que décrits précédemment et la viscosité du mélange a une valeur d'au moins 500 000 mPa.s à 25 °C la valeur de x ou la somme de x et y et / ou s (lorsque l'un ou l'autre, ou les deux dont présents) étant au moins 1 000 et la valeur de x¹ et y¹ étant entre 100 et 1 000.

5. Une composition selon n'importe quelle revendication précédente **caractérisée en ce que** l'hydroxyapatite est traitée avec un organopolysiloxane sélectionné dans le groupe des polydiméthylsiloxanes à terminaison hydroxy ayant un degré de polymérisation allant de 2 à 20, alkylalcénylsiloxanes polydialkyles à terminaison hydroxy ayant un degré de polymérisation allant de 2 à 20 et un agent de traitement ayant la formule :
R⁴_{d}H_{3-d}SiO[(R⁴₂SiO)_{f}(R⁴HSiO)_{g}]SiR⁴_{d}H_{3-d}
où dans chaque formule, R⁴ représente un groupe alkyle contenant de 1 à 6 atomes de carbone ; H est de l'hydrogène, d est zéro ou un nombre entier allant de 1 à 3 ; et f et g sont indépendamment zéro ou un nombre entier, l'agent de traitement a au moins un des groupes Si-H et une viscosité allant de 5 à 500 m.Pa.s à 25 °C.

6. Une composition selon n'importe quelle revendication précédente dans laquelle l'hydroxyapatite comprend une hydroxyapatite traitée avec un alkoxysilane de la formule :
R³₍₄₋ₙ₎Si(OR³)ₙ
où n a une valeur de 1 à 3 ; et R³ est un groupe alkyle, un groupe aryle, ou un groupe alcényle.

7. Une composition selon la revendication 6 dans laquelle l'alkoxysilane est un composé sélectionné dans le groupe consistant en méthyltriéthoxysilane, méthyltriméthoxysilane, phényltriméthoxysilane, vinyltriéthoxysilane, et vinyltriméthoxysilane.

8. Une composition selon n'importe quelle revendication précédente comprenant des quantités à peu près égales de gomme de polysiloxane et d'hydroxyapatite.

9. Une composition selon n'importe quelle revendication précédente dans laquelle l'agent de durcissement est un peroxyde sélectionné dans le groupe consistant en peroxyde de benzoyle, peroxyde de 2,4-dichlorobenzoyle, peroxyde de di-t-butyle, et peroxyde de dicumyle.

10. Une composition conformément à une quelconque des revendications 1 à 8 dans laquelle l'agent de durcissement est un agent de durcissement organohydrogénosiloxane, et un catalyseur d'hydrosilylation à base de métal du groupe du platine est ajouté dans une quantité suffisante pour durcir la composition.

11. Une méthode pour réaliser une hydroxyapatite traitée contenant une composition de caoutchouc de silicone conformément à une quelconque des revendications 1 à 10, laquelle méthode consiste essentiellement en les étapes suivantes :
(i) mélanger un organopolysiloxane et une hydroxyapatite traitée dans des conditions de température ambiante,
(ii) ajouter un agent de durcissement au mélange en (i) ; et durcir le mélange en (ii) à une température supérieure à la température ambiante par l'application de chaleur.

12. Une méthode selon la revendication 11 dans laquelle la température ambiante est la température ambiante normale allant de 20 à 25 °C.

13. Utilisation d'une hydroxyapatite traitée comme charge de renforcement dans une composition de caoutchouc de silicone comprenant :
(i) un organopolysiloxane ayant une viscosité d'au moins 100 mPa.s à 25 °C
(ii) une charge traitée,
(iii) un agent de durcissement convenant pour effectuer le durcissement de la composition ;
**caractérisée en ce que** la charge traitée comprend une charge d'hydroxyapatite traitée, pour rendre le ou les charges hydrophobes, traitée avec un agent de traitement adéquat sélectionné parmi les acides gras et / ou les esters d'acides gras ou les organosilanes, les organosilazanes ou les polymères organopolysiloxanes à chaîne courte et la composition est essentiellement dépourvue de charges de silice de renforcement, de telle sorte que des charges de silice ne peuvent être présentes que jusqu'à une quantité maximale de 5 parties en poids pour 100 parties en poids du poids total cumulatif du polymère + la charge d'hydroxyapatite traitée.

14. Utilisation conformément à la revendication 13 **caractérisée en ce que** la composition de caoutchouc de silicone est dépourvue de silice.

15. Utilisation conformément à la revendication 13 dans laquelle l'hydroxyapatite traitée est la seule charge de renforcement dans la composition de caoutchouc de silicone.

16. Utilisation d'une composition de caoutchouc de silicone conformément à une quelconque des revendications 1 à 7 dans des extrusions de profilés de silicone, des revêtements de fil et de câble, des joints de vitrage, et pour des joints de construction.

17. Une composition de caoutchouc de silicone conformément à la revendication 1 **caractérisée en ce que** la charge de renforcement consiste en hydroxyapatite.
